# FASCICULE DE BREVET EUROPEEN

(11) **EP 3 458 339 B1**
(45) Date de publication et mention de la délivrance du brevet: **19.08.2020**
(21) Numéro de dépôt: 17729181.2
(22) Date de dépôt: 18.05.2017
(51) Int. Cl.: B62D 15/02

(54) **PROCÉDÉ DE CORRECTION DE LA TRAJECTOIRE D'UN VÉHICULE AUTOMOBILE PAR DÉTECTION DE MARQUAGES ROUTIERS AU SOL**
VERFAHREN ZUR KORREKTUR DER FAHRTRICHTUNG EINES KRAFTFAHRZEUGS DURCH ERKENNUNG VON STRASSENMARKIERUNGEN AUF DEM BODEN
METHOD FOR CORRECTING THE DIRECTION OF TRAVEL OF A MOTOR VEHICLE BY DETECTING ROAD MARKINGS ON THE GROUND

(30) Priorité: 19.05.2016 FR 1654481
(43) Date de publication de la demande: 27.03.2019
(73) Titulaire: Renault s.a.s., 92100 Boulogne-Billancourt (FR)
(72) Inventeur: MINOIU-ENACHE, Nicoleta, 78000 Versailles (FR); GEOFFRIAULT, Maud, 91300 Massy (FR); MENANTEAU, Etienne, 75015 Paris (FR)
(86) Numéro de dépôt international: PCT/FR2017/051212
(87) Numéro de publication internationale: WO 2017/198959

(56) Documents cités:
- EP-A1- 1 862 374
- DE-A1- 19 948 913
- DE-A1-102006 060 628
- US-A1- 2006 030 987

## Description

La présente invention se rapporte à un procédé de correction de la trajectoire d'un véhicule automobile par détection de marquages routiers au sol.

Dans le domaine de la sécurité automobile, il est connu qu'un risque important d'accident résulte de la perte d'attention du conducteur sur sa conduite, notamment lorsque le conducteur s'assoupit au volant.

Afin de pallier ce danger, une technique généralement connue sous le nom de « Lane Keeping Assist », ou sous l'acronyme LKA, consiste à détecter la position du véhicule automobile par rapport aux marquages routiers au sol, et à corriger la trajectoire du véhicule si celle-ci est manifestement incorrecte, alors que le conducteur n'y apporte pas lui-même de correction.

Le dispositif LKA de manière connue est actif lorsqu'un manque d'attention est détecté chez un conducteur et il a pour objet de ramener de façon automatique le véhicule dans sa voie de circulation. Le manque d'attention du conducteur peut être détecté par exemple par une circulation du véhicule en dehors de sa voie de circulation avec un couple au volant exercé par le conducteur faible et en deçà d'un seuil de couple d'attention. Au-delà dudit seuil d'attention, le conducteur est réputé maitriser son véhicule et le système LKA est désactivé.

Le dispositif LKA a pour objectif d'agir sur la colonne de direction du véhicule automobile lorsqu'il s'avère nécessaire de corriger la trajectoire dangereuse ou non souhaitée.

Le dispositif LKA comprend généralement une caméra orientée vers l'avant du véhicule automobile, par exemple installée derrière le rétroviseur intérieur du véhicule automobile, de manière à pouvoir détecter le marquage routier à l'avant du véhicule automobile.

Cette détection est effectuée par une unité de traitement vidéo qui récupère le flux vidéo de la caméra, en extrait des informations sur la dynamique du véhicule automobile par rapport au marquage routier et détermine les actions correctives à effectuer, en fonction notamment de l'action du conducteur sur le véhicule automobile. Lesdites actions correctrices sont des valeurs de couple de correction adressée à une machine électrique apte à actionner la colonne de direction du véhicule.

Le dispositif LKA est notamment mis en œuvre sur des véhicules équipés d'une direction assistée électrique.

De façon générale, un dispositif de direction assistée de véhicule automobile, comprend un organe de commande contrôlant une machine électrique adaptée à actionner une colonne de direction du véhicule. L'organe de commande reçoit la commande de couple appliqué au volant de direction par le conducteur, dit couple conducteur, et la convertit en une valeur de couple à appliquer à la machine électrique pour actionner la colonne de direction, dit couple actionneur

Cette conversion entre deux grandeurs de couple est effectuée par l'organe de commande en mettant en œuvre un procédé de conversion impliquant une fonction non-linéaire, tenant compte de la vitesse du véhicule automobile pour donner à partir d'un couple conducteur mesuré un couple actionneur comportant l'assistance de direction, ladite assistance dépendant donc de la vitesse du véhicule. On connait notamment une fonction d'amplification du couple d'assistance en fonction de la vitesse du véhicule dite Boost Curve employée dans les directions assistées électriques de véhicule automobile.

L'organe de commande met aussi en œuvre une étape de vérification de la conversion, destinée à s'assurer que la commande de couple actionneur générée par la conversion n'est pas aberrante au regard de la dynamique du véhicule automobile. Une telle étape de vérification est essentielle pour la sécurité du véhicule, car elle permet de détecter et d'interdire des commandes sur l'actionneur de la colonne de direction qui pourraient mettre en danger les passagers du véhicule automobile, par exemple une commande qui provoquerait une très forte variation de braquage.

On connait du document DE19943410 A1 un dispositif similaire à un dispositif LKA, comprenant un calculateur embarqué permettant de calculer un couple d'assistance pour modifier la trajectoire du véhicule en détectant les marquages routiers au sol, en fonction du couple conducteur, de la vitesse du véhicule et de l'évolution du véhicule par rapport au marquage au sol détecté.

Ce couple d'assistance est déterminé de manière à être sommé au couple actionneur déterminé par l'organe de commande de la direction assistée électrique, cette somme étant appliquée à l'actionneur de la colonne de direction.

Cependant, une telle solution présente des inconvénients en termes de sécurité, car l'étape de vérification de la valeur de couple amplifié pour aider le conducteur ne tient pas compte du couple LKA, ce qui nécessite la mise en place d'une nouvelle barrière de sécurité pour la combinaison des deux couples.

La publication US6640923 divulgue un procédé de contrôle de trajectoire de véhicule automobile comprenant :
- la formation d'une différence d'angle entre la position des roues directrices et un angle de direction de consigne qui est une superposition de l'angle au volant mesuré, de l'angle de correction issu d'une étape de détermination,
- un réglage de la position des roues directrices en fonction de la différence d'angle;
- la compensation de l'angle de braquage de correction de direction à une colonne de direction.

Les différents angles au volant, de correction et de position des roues doivent être déterminés en continu. Un autre inconvénient est une consigne indépendante du couple actionneur issu du couple conducteur.

Aussi, il existe le besoin d'un dispositif d'assistance par détection des marquages routiers présentant une meilleure sécurité de fonctionnement et plus d'autonomie dans la conception par rapport au dispositif d'assistance de direction avec la fonction d'amplification du couple d'assistance déjà mis en place.

Un autre inconvénient est l'absence de comparaison entre les deux valeurs de couple entre le couple issu de la commande volant et le couple issu du dispositif LKA. Pendant les instants où le conducteur présente un défaut de vigilance ou d'attention, le couple issu du dispositif LKA doit être prépondérant sur le couple conducteur et doit être envoyé seul à la machine électrique. Le document EP 1 862 374 A1 est considéré comme l'art antérieur le plus proche selon les caractéristiques du préambule de la revendication 1.

A cet effet, on propose un procédé de correction de la trajectoire d'un véhicule automobile par détection de marquages routiers au sol, le véhicule automobile comprenant un dispositif de direction assistée électrique comportant un volant de direction, une machine électrique coopérant avec une colonne de direction du véhicule automobile et un organe de commande mettant en œuvre une étape de détermination d'un couple de consigne de braquage pour la colonne de direction et une étape de conversion du couple de consigne de braquage en un couple actionneur destiné à être appliqué à la machine électrique, ledit procédé de correction comprenant une première étape de détermination d'un couple actionneur de correction pour agir sur la machine électrique de manière à corriger la trajectoire du véhicule automobile en fonction d'une détection des marquages routiers au sol, ledit procédé étant caractérisé, en ce qu'il comprend une étape de traitement effectuée par le dispositif de direction assistée passant par l'étape de conversion.

La correction peut ainsi être effectuée sans remettre en cause les barrières de sécurité déjà développées pour une assistance standard à la direction.

On peut corriger la trajectoire du véhicule tout en assurant une sécurité correcte du véhicule automobile, car le couple de correction est pris en compte par l'organe de commande de la direction assistée électrique, qui peut donc appliquer ses critères de sécurité sur la valeur réelle de couple à appliquer à l'actionneur, ici la machine électrique, tenant compte de la valeur de correction déterminée par le procédé de correction de la trajectoire.

Avantageusement et de manière non limitative, ledit couple de consigne de braquage résulte en outre d'un couple conducteur appliqué sur le volant de direction du véhicule automobile. Ainsi, on peut tenir compte de l'action du conducteur du véhicule pour corriger la trajectoire du véhicule automobile.

Selon l'invention, le procédé comprend une étape de conversion inverse précédant l'étape de traitement par le système de direction assistée. Ainsi, le couple actionneur de correction est transformé pour être transmis à l'étape de traitement effectué par le dispositif de direction assistée sans créer des perturbations sur le couple actionneur issu de l'étape de conversion. Ladite étape de conversion inverse comprend l'application d'une fonction correspondant à l'inverse de ladite fonction de conversion mise en œuvre par l'organe de commande du dispositif de direction assistée. Ainsi, ces deux fonctions permettent de simplifier la régulation et la communication entre le système de direction assistée électrique et le système de correction de la trajectoire du véhicule automobile par détection des marquages routiers au sol.

De manière avantageuse, le procédé procure à l'étape de traitement une consigne de correction de braquage partie de la commande de couple consigne de braquage.

De cette façon, la consigne de correction de braquage peut être traitée simplement par le dispositif de direction assistée. L'étape de conversion mise en œuvre par l'organe de commande est effectuée sur la somme de ladite consigne de correction de braquage avec ledit couple conducteur. Les valeurs reçues par l'organe de commande, sont des valeurs sommables, car dans un même ordre de grandeur de couple, à savoir des valeurs de couple conducteur et non pas des valeurs de couple actionneur, destinées à être directement appliquées à la machine électrique, ce qui permet d'avoir une interface de l'organe de commande standard et relativement simple à mettre en œuvre.

De manière avantageuse, le couple actionneur est égal au couple actionneur de correction.

Ledit couple actionneur est égal au couple actionneur de correction si le couple appliqué sur le volant est inférieur à une valeur de seuil. Ainsi lorsque le couple appliqué sur le volant est très faible et inférieur à la valeur de seuil, le conducteur présente un défaut de vigilance et donc seul le couple de correction de braquage est envoyé à la machine électrique pour ramener le véhicule automobile dans sa voie de circulation. Lors des instants de défaut de vigilance du conducteur, le couple actionneur de correction est donc prépondérant sur le couple actionneur issu du couple conducteur. Le véhicule est de façon automatique ramené dans sa voie de circulation en négligeant le couple conducteur faible.

De manière avantageuse, l'étape de conversion inverse est supportée par une courbe de conversion de couple en fonction de la vitesse du véhicule et/ou d'un angle de braquage du véhicule automobile et/ou d'une valeur de déviation latérale du véhicule automobile et/ou d'une valeur de lacet du véhicule automobile.

Ladite courbe est bien connue et est relative à la fonction de conversion qui est une fonction d'amplification, du dispositif de direction assistée. Ainsi, on peut tenir compte des paramètres dynamiques du véhicule automobile pour transformer la valeur déterminée de couple actionneur de correction en une consigne de correction de braquage.

De manière avantageuse, la courbe de conversion de couple de l'étape de conversion inverse est commune avec la courbe de conversion de couple de l'étape de conversion du système de direction assistée.

Ladite courbe est bien connue et est relative à la fonction de conversion qui est une fonction d'amplification, du dispositif de direction assistée. Cette dernière courbe est bijective et permet d'obtenir facilement la fonction de conversion inverse.

De manière avantageuse, la courbe de conversion de couple de l'étape de conversion inverse est issue de séquences de tests et validations.

Une séquence de tests et validations permet de vérifier les valeurs d'assistance de direction du dispositif de direction assistée et de déduire simplement la courbe de la fonction inverse.

De manière avantageuse, l'étape de détermination du couple actionneur de correction comprend une étape de régulation en boucle fermée d'un écart obtenu entre un angle de braquage de correction et un angle de braquage mesuré comportant:
- l'étape de détermination d'un couple actionneur de correction,
- l'étape de traitement effectuée par le dispositif de direction assistée passant par l'étape de conversion.

Ainsi grâce à l'étape de conversion inverse, l'étape de détermination du couple actionneur de correction comprend une étape de régulation en boucle fermée d'un système comprenant le dispositif LKA et le dispositif de direction assistée. La comparaison entre le couple de correction LKA et le couple conducteur est beaucoup plus facile, ce qui est important pour les limitations de sécurité ou la gestion du confort conducteur et ce qui facilite également la régulation sur l'angle de direction.

L'invention concerne aussi un organe de correction de la trajectoire d'un véhicule automobile adapté pour mettre en œuvre un procédé de correction tel que décrit précédemment.

L'invention concerne aussi un dispositif de correction de la trajectoire du véhicule automobile comprenant un organe de correction tel que décrit précédemment.

L'invention concerne aussi un véhicule automobile comprenant un système de correction de la trajectoire du véhicule automobile tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est un schéma fonctionnel d'un premier mode de réalisation d'un procédé de correction selon l'invention ;
- la figure 2 est un schéma fonctionnel d'un deuxième mode de réalisation d'un procédé de correction selon l'invention ;
- la figure 3 est un schéma fonctionnel d'un troisième mode de réalisation d'un procédé de correction selon l'invention ; et
- la figure 4 est un graphique représentant une pluralité de courbes représentatives de la fonction Boost Curve, chaque courbe représentant l'amplification permettant de passer d'un couple conducteur appliqué au volant, en abscisse, en un couple appliqué à la machine électrique, en ordonnée, pour une vitesse du véhicule automobile donnée .

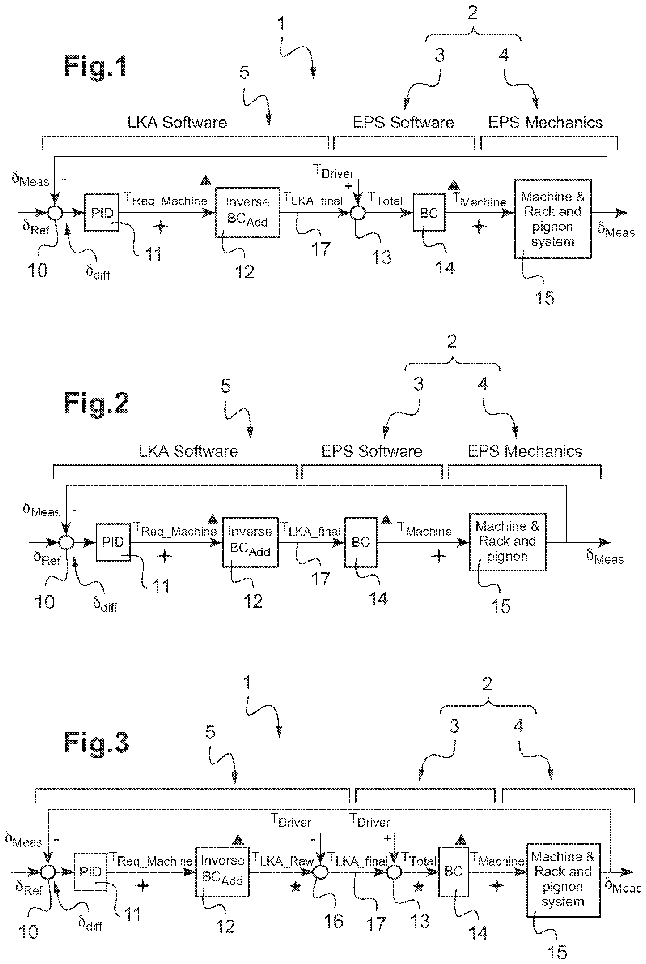

En référence à la figure 1, on met en œuvre un procédé 1 de correction de trajectoire par détection de marquages routiers au sol sur un véhicule automobile.

Le véhicule automobile, non représenté, comprend un dispositif de direction assistée électrique 2 formé d'un ensemble mécanique 4 et d'un organe de commande 3.

L'ensemble mécanique 4 du dispositif de direction assistée électrique 2 comprend un volant de direction, non représenté, pour diriger manuellement par un conducteur le véhicule automobile, une colonne de direction commandée par le volant, et une machine électrique 15, adaptée pour actionner la colonne de direction.

Le véhicule automobile comprend aussi un dispositif de correction de la trajectoire du véhicule automobile par détection du marquage routier au sol, auquel on se référera par la suite comme étant le dispositif LKA acronyme pour « Lane Keeping Assist ».

Le dispositif LKA comprend :
- une caméra pour détecter les marquages routiers au sol, en particulier pour détecter les marquages à l'avant et sur les côtés du véhicule automobile.
- un organe de traitement du flux vidéo, non représenté,
- un organe de détermination d'une correction de trajectoire à appliquer, non représenté,
- et un organe de correction 5 de la trajectoire du véhicule automobile.

Les différents organes du système LKA peuvent être formés par un même microprocesseur ou processeur de traitement du signal, DSP, ou répartis dans différents microprocesseurs ou DSP.

L'organe de détermination de correction de trajectoire du système LKA détermine l'angle de braquage de correction δ_{Ref}, à appliquer au véhicule automobile afin de corriger sa trajectoire.

L'organe de correction 5 a pour but de recevoir la correction de trajectoire déterminée sous forme d'un angle de braquage de correction, de la transformer en valeur de couple de correction et de transmettre selon l'invention après une étape de conversion inverse, une commande de la correction à appliquer au dispositif de direction assistée 2 du véhicule automobile.

La fonction de sécurité active LKA est donc apte à agir sur la commande de direction du véhicule en fournissant une consigne de couple de correction de braquage T_{LKA_Final} pour corriger la trajectoire du véhicule automobile. Ladite consigne de couple de correction de trajectoire est selon l'invention fournie à la partie de l'organe de commande 3 du dispositif de direction assistée en charge de la définition d'une consigne de couple de braquage.

L'organe de commande 3 est une unité de contrôle comprenant un microprocesseur, une mémoire et des moyens de communication en entrée-sortie ; il est adapté pour recevoir notamment une valeur de couple conducteur T_{Driver}, ici un couple appliqué sur le volant de direction, et d'autres valeurs de couples, dont la consigne de couple de correction de braquage T_{LKA_Final} de trajectoire, de manière à déterminer un couple de consigne de braquage T_{Total} L'organe de commande 3 met ensuite en œuvre une étape de conversion 14 du couple, convertissant le couple de consigne de braquage T_{Total}, en un couple actionneur T_{Machine} adapté pour commander la machine électrique 15 afin d'actionner la colonne de direction.

La conversion 14 est effectuée en fonction de la dynamique du véhicule, en particulier en fonction de sa vitesse instantanée v, d'un angle de braquage du véhicule automobile et/ou d'une valeur de lacet du véhicule automobile. Dans la description qui suit, pour faciliter la compréhension, la conversion 14 est fonction de la vitesse du véhicule. Elle consiste essentiellement en une étape d'amplification du couple de consigne de braquage T_{Total} pour réduire le couple appliqué sur le volant de direction par le conducteur, afin de diminuer les efforts physiques nécessaires pour diriger le véhicule automobile.

Selon l'invention, l'étape de conversion 14 met en œuvre une fonction dite « Boost Curve » BC, connue de l'homme du métier comme étant une fonction d'amplification adaptée pour convertir la valeur de couple de consigne de braquage T_{Total}, en une valeur de couple actionneur T_{machine} de la machine électrique 15, tenant compte de la vitesse v du véhicule automobile et du couple d'entrée à amplifier qui est ici le couple de consigne de braquage.

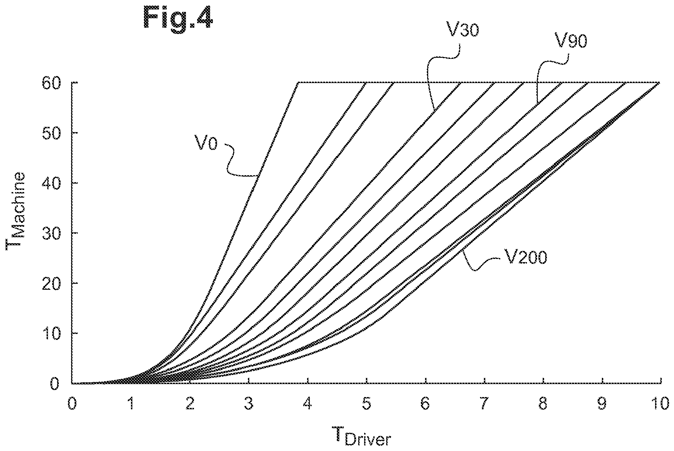

Ladite fonction « Boost Curve », aussi abrégée en BC, est une fonction fortement non-linéaire, qui présente la forme d'une courbe exponentielle en fonction de la vitesse v du véhicule, ladite courbe étant saturée au couple maximal autorisé par la machine électrique 15. Ainsi, pour chaque vitesse du véhicule, des courbes représentées en figure 4, par exemple v₀ correspondant à la fonction BC pour une vitesse nulle du véhicule automobile, v₃₀ correspondant à la fonction BC pour une vitesse du véhicule de 30km/h, _{V90} correspondant à la fonction BC pour une vitesse du véhicule de 90 km/h, et v₂₀₀ correspondant à la fonction BC pour vitesse du véhicule de 200km/h, fournissent une valeur de couple actionneur en fonction d'une valeur de couple d'entrée qui est ici le couple de consigne de braquage T_{Total}, à amplifier.

On peut remarquer que le couple actionneur T_{machine} à appliquer à la machine électrique ne reflète pas toujours la consigne de couple conducteur de braquage T_{Driver} appliquée par le conducteur. En particulier, certaines valeurs de couple très faibles de couple conducteur T_{Driver} sur le volant de direction, liées aux mouvements involontaires du conducteur sur le volant, ne sont pas forcément répercutées sur la colonne de direction, afin d'améliorer le confort et la sécurité du véhicule automobile. A cet effet, pour de faibles valeurs de couple en entrée, par exemple entre 0 et 3 Nm, la valeur de couple actionneur T_{machine} est également faible voire nulle ce qui est de moindre importance pour toute une plage de vitesses du véhicule par exemple de 0 à 200 km/h. On peut ainsi considérer que pour toute vitesse dans la plage de 0 à 200km/h, un couple d'entrée T_{Total} de valeur inférieure à 3Nm n'engendre pas de couple actionneur d'assistance T_{machine}. A l'inverse, toute valeur faible de couple à la machine désirée peut être associée à une valeur couple d'entrée inférieure à 3Nm correspondant par exemple à une sollicitation non désirée du conducteur.

On peut également prendre en compte une variation sensiblement linéaire depuis une valeur nulle de couple d'entrée jusqu'à une valeur d'extrémité de 2 ou 3 Nm associée à une variation linéaire de la valeur de couple de sortie de 0 à 0.3Nm.

De façon connue dans les systèmes d'assistance de direction, cette fonction permet de déterminer le couple d'assistance en fonction de la vitesse du véhicule avec la mesure du couple conducteur.

La non-linéarité de cette fonction de conversion de couple entraîne des difficultés en termes de régulation en boucle fermée. En particulier, il est rendu difficile de garantir un asservissement correct notamment avec l'emploi du régulateur, fiable pour des asservissements linéaires et simples à mettre en œuvre.

La valeur de couple actionneur T_{machine} est ensuite vérifiée lors d'une étape de vérification de la conversion, permettant de garantir la sûreté de fonctionnement du système de direction assistée électrique, de sorte à ne pas fournir à la machine électrique 15 une valeur de couple actionneur erronée ou aberrante, qui pourrait mettre en danger les passagers du véhicule automobile.

Si cette valeur de couple actionneur T_{machine} est déterminée comme étant cohérente au terme de la vérification, celle-ci est alors transmise à la machine électrique 15 pour actionner la colonne de direction.

Selon l'invention, la consigne de correction de trajectoire T_{LKA_Final} est ajoutée à la consigne de couple conducteur T_{Driver} pour la détermination dudit couple de consigne T_{Total} afin de :
- pouvoir conserver un jugement d'arbitrage de couple entre le couple conducteur et le couple de correction de trajectoire LKA sur une même grandeur physique et d'assurer un bon ressenti au niveau du volant.
- de ne pas impacter la sûreté de fonctionnement avec une demande de couple directement à la machine électrique, pendant qu'une entrée en couple équivalent conducteur garde les mêmes barrières de sécurité déjà développées pour une assistance standard à la direction.

De plus, de par l'aspect fortement non-linéaire de la fonction « Boost - CCurve », il est préférable que le dispositif LKA détermine des valeurs de couple actionneur, qui influent directement sur la machine électrique 15 actionnant la colonne de direction du véhicule automobile.

De manière avantageuse, le couple de correction de trajectoire T_{LKA_Final} est pris en compte en entrée par le dispositif de direction assistée et suit les mêmes règles de sécurité dudit dispositif de direction assistée comme le couple conducteur T_{Driver} avant d'être adressé à la machine électrique, ce qui ne nécessite pas d'étape d'étalonnage longue et sensible pour s'assurer que le système LKA évalue des valeurs cohérentes par rapport notamment à l'étalonnage de la direction assistée électrique.

De manière générale, la correction de trajectoire met en œuvre une régulation de l'angle de braquage en fonction de la consigne de correction de braquage pour ramener le véhicule en ligne ou le maintenir dans la voie de conduite. La régulation met en œuvre un régulateur PID, apte à convertir un angle de correction en un couple de correction.

Ainsi l'organe de correction 5 détermine, en fonction de l'angle de braquage de correction δ_{Ref}, une valeur de couple actionneur de correction T_{Req_Machine}, qui est une valeur de couple directement adaptée à commander la machine électrique 15 pour corriger la trajectoire.

L'organe de correction 5 évalue au cours d'une étape d'estimation 10 de l'écart d'angle δ_{diff} entre l'angle de braquage de correction δ_{Ref} déterminé, et un angle mesuré δ_{Meas} de braquage du véhicule automobile.

L'angle mesuré δ_{Meas} peut être par exemple un angle mesuré du volant de direction, ou un angle de braquage mesuré sur la colonne de direction.

L'organe de correction 5 applique ensuite une étape de régulation 11 pour obtenir en final l'angle de correction δ_{Ref} déterminé, de manière connue en partant de l'écart d'angle δ_{diff} obtenu, par un régulateur proportionnel intégral dérivé PID, ou par tout autre régulateur connu, en particulier par des régulateurs rapides et simples à mettre en œuvre, notamment pour des systèmes linéaires.

Ainsi, on régule simplement l'angle de braquage de correction δ_{Meas} indépendamment des problèmes de non-linéarité posés par l'utilisation de la fonction de conversion « Boost-Curve ».

En fonction de la différence δ_{diff} entre l'angle de braquage de référence δ_{ref}, et l'angle de braquage mesuré δ_{Meas}, l'organe de correction 5 détermine alors une valeur de couple actionneur de correction T_{Req_Machine} destiné à être appliqué à la machine électrique 15, pour actionner la colonne de direction afin de corriger la trajectoire du véhicule automobile.

Cependant, comme évoqué ci-dessus, pour des raisons de sécurité, la valeur du couple actionneur de correction est envoyée à l'organe de commande 3 du dispositif de direction assistée électrique, qui est apte à agir directement sur la machine électrique 15, car il met en œuvre l'étape de vérification de la conversion décrite précédemment.

La valeur de couple actionneur T_{machine} est ensuite adressée à la machine électrique et une valeur d'angle de braquage est à nouveau mesurée et renvoyée en entrée de la boucle de régulation.

L'étape de régulation 11 comporte donc :
- l'étape de détermination d'un couple actionneur de correction du dispositif LKA,
- l'étape de conversion inverse du dispositif LKA
- l'étape de traitement effectuée par le dispositif de direction assistée passant par l'étape de conversion.

L'étape de conversion inverse facilite ainsi la régulation de correction de trajectoire en réduisant les influences de la fonction de converse ou d'amplification du dispositif de direction assistée. La régulation peut ainsi être plus rapide.

Selon un mode de réalisation de l'invention, afin d'éviter des valeurs trop faibles de couples de correction, l'organe de correction 5 est conçu pour transmettre à l'organe de commande 3, une consigne de correction de braquage T_{LKA_final}, correspondant à une valeur de couple de correction supérieur à une valeur seuil de couple dans l'ordre de grandeur des valeurs de couple de consigne de braquage du conducteur sur le volant. Les valeurs inférieures audit seuil peuvent être ignorées.

Ainsi, la consigne de correction de braquage T_{LKA_final}, qui est une valeur de couple, est cohérente avec le couple conducteur T_{Driver} de telle sorte qu'ils peuvent être sommés au cours d'une étape d'addition 13 mise en œuvre par l'organe de commande 3 pour obtenir le couple de consigne de braquage T_{Total} à convertir.

Pour obtenir une telle consigne de correction de braquage T_{LKA_final}, l'organe de correction 5 met en œuvre, dans le cadre de son procédé de correction de la trajectoire 1, une étape de conversion inverse 12 au cours de laquelle on applique au couple actionneur de correction T_{Req_Machine} déterminé une fonction inverse correspondant à l'inverse de la fonction d'amplification « Boost Curve » mise en œuvre par l'organe de commande 3 du système de direction assistée électrique.

Dans ce mode de réalisation, on considère que la fonction « Boost Curve » est bijective en fonction de la vitesse du véhicule, ce qui est vérifié par chaque courbe d'amplification en figure 4, et elle peut être facilement inversable. Ladite fonction d'amplification BC peut également dépendre d'un angle de braquage du véhicule automobile et/ou d'une valeur de lacet du véhicule automobile.

La fonction BC représentée par les courbes de la figure 4 est unique en fonction d'une vitesse de véhicule donnée. A une valeur de consigne de couple de correction correspond une unique valeur de couple d'entrée à une vitesse de véhicule donnée. Chacune de ces courbes d'amplification de la fonction BC sont spécifiques à la fonction d'assistance de direction assistée électrique ou DAE du véhicule. Elles sont soit connues par la fonction d'assistance direction soit issues d'une séquence de tests et validation dudit véhicule.

Lesdites courbes d'amplification sont alors relevées et inscrites dans la mémoire de l'organe de commande 3 qui est alors apte à déterminer une valeur de couple de consigne de correction T_{LKA_final} à partir d'une valeur de couple actionneur de correction T_{Req_Machine} déterminée par l'organe de correction 5.

De cette manière, après avoir obtenu la consigne de correction de braquage T_{LKA_Fmal}, l'organe de correction 5 transmet, au cours d'une étape de transmission 17, cette consigne de correction de braquage T_{LKA-Final} à l'organe de commande 3 du système de direction assistée électrique. L'organe de commande 3 reçoit la valeur de couple correspondant à la consigne de correction de braquage T_{LKA_final}.

La consigne de correction de braquage T_{LKA_final}, est sommée au cours de l'étape d'addition 13 mise en œuvre par l'organe de commande 3 pour obtenir le couple de consigne de braquage T_{Total} à convertir en couple actionneur.

Le couple de consigne de braquage T_{Total} est ensuite converti par application de la fonction d'amplification de couple, ici par application de la fonction « Boost Curve », ce qui permet d'obtenir un couple actionneur T_{Machine} intégrant la correction de couple déterminée par le système _{LKA}.

Après avoir été vérifié au cours de l'étape de vérification de la conversion, le couple actionneur T_{Machine} corrigé est alors transmis à la machine électrique 15.

Ainsi, on peut corriger la trajectoire du véhicule automobile par détection des marquages routiers au sol, tout en respectant les critères de sécurité nécessaires au bon fonctionnement du véhicule automobile.

Ainsi, la calibration du système LKA est indépendante de la calibration de la fonction « Boost Curve » dans le système de direction assistée électrique.

Le processus de développement de la calibration de la fonction « Boost Curve » du système de direction assistée électrique peut alors intervenir très tardivement, après que les paramètres mécaniques de la voiture sont figés de manière fine.

En absence de ce découplage des calibrations, le système LKA devrait être calibré uniquement après la calibration de la fonction « Boost Curve », ce qui ajoute un délai important au processus de développement.

Le système LKA permet donc de fournir un couple de correction pour maintenir le véhicule dans la voie ou pour le remettre en ligne. L'organe de correction 5 fournit la valeur de couple désirée de correction à l'organe de commande 3 de la direction assistée. La conversion de la valeur de couple de correction en valeur de couple d'entrée est effectuée par l'organe de correction 5, et ladite valeur est ajoutée à la valeur du couple conducteur mesurée avant la fonction d'amplification BC par l'organe de commande 3.

Cependant, afin d'assurer la sécurité et réaliser la correction de trajectoire LKA, un couple déterministe doit pouvoir être demandé à la machine électrique.

La valeur du couple de correction T_{Req_Machine} est prépondérante sur la valeur de couple conducteur au volant lors de phase de défaut de vigilance du conducteur.

De cette manière, lors de la détection de défaut de vigilance du conducteur, le couple actionneur T_{Machine} est sensiblement égal au couple au couple actionneur de correction T_{Req_Machine}.

Selon un mode de réalisation de l'invention, en référence à la figure 2, il n'est pas tenu compte du couple conducteur T_{Driver} appliqué sur le volant. Ceci peut notamment être utile dans le cadre des véhicules autonomes, où l'action du conducteur est optionnelle.

Dans ce cas, par contraste avec le premier mode de réalisation, il n'est pas nécessaire de mettre en œuvre l'étape d'addition 13 entre la consigne de correction de braquage T_{LKA_final} et le couple conducteur T_{Driver}. Cependant, il peut être alors nécessaire de prendre en compte d'autres valeurs de commande de couple, par exemple déterminées par un organe de conduite autonome.

Comme le couple de la consigne de correction de braquage T_{LKA_Final} est appliqué intégralement quand le conducteur agit par le couple conducteur T_{Driver} en même temps que le système LKA, une stratégie de saturation de la consigne de correction de braquage T_{LKA_Final} peut être développée en fonction du couple conducteur T_{Driver} sans avoir à pallier le couplage entre le couple conducteur T_{Driver} et la consigne de correction de braquage T_{LKA_final}

En particulier, dans un autre mode de réalisation de l'invention, en référence à la figure 3, avant la mise en œuvre de l'étape de transmission 17 de la consigne de correction de braquage T_{LKA_final}, on soustrait dans une étape 16, à la consigne de correction de braquage issue de l'étape de conversion inverse 12, le couple conducteur T_{Driver} issu de mesures. Ainsi, l'étape d'addition 13 mise en œuvre par l'organe de commande 3, n'aura pour effet que de rajouter le couple conducteur T_{driver} précédemment enlevé à la consigne de correction de braquage T_{LKA_Final}. De cette manière la consigne de correction de braquage T_{LKA_final} est rendue indépendante du couple conducteur T_{driver}, ce qui permet une correction de trajectoire plus efficace, en rejetant la consigne du conducteur sur le volant.

## Revendications

1. Procédé de correction (1) de la trajectoire d'un véhicule automobile par détection de marquages routiers au sol, le véhicule automobile comprenant un dispositif de direction assistée électrique (2) comportant un volant de direction, une machine électrique (15) coopérant avec une colonne de direction du véhicule automobile et un organe de commande (3) mettant en œuvre une étape de détermination (13) d'un couple de consigne de braquage (T_{Total}) pour la colonne de direction et une étape de conversion (14) du couple de consigne de braquage (T_{Total}) en un couple actionneur (T_{Machine}) destiné à être appliqué à la machine électrique (15), ledit procédé de correction (1) comprenant une première étape de détermination d'un couple actionneur de correction (T_{Req_Machine}) pour agir sur la machine électrique (15) de manière à corriger la trajectoire du véhicule automobile en fonction d'une détection des marquages routiers au sol, ledit procédé de correction (1) étant **caractérisé en ce qu'**il comprend une étape de traitement effectuée par le dispositif de direction assistée passant par l'étape de conversion (14), le procédé comprenant une étape de conversion inverse (12) précédant l'étape de traitement par le système de direction assistée.

2. Procédé de correction (1) selon la revendication 1, **caractérisé en ce que** le procédé procure à l'étape de traitement une consigne de correction de braquage (T_{LKA_final}) partie de la commande de couple consigne de braquage (T_{Total}).

3. Procédé de correction de la trajectoire d'un véhicule automobile selon l'une quelconque des revendications 1 ou 2, **caractérisé en ce que** couple actionneur (T_{Machine}) est égal au couple actionneur de correction (T_{Req_Machine)}.

4. Procédé de correction de la trajectoire d'un véhicule automobile selon l'une quelconque des revendications 1 à 3, **caractérisée en ce que** l'étape de conversion inverse (12) est supportée par une courbe de conversion de couple en fonction de la vitesse du véhicule et/ou d'un angle de braquage du véhicule automobile et/ou d'une valeur de déviation latérale du véhicule automobile et/ou d'une valeur de lacet du véhicule automobile.

5. Procédé de correction de la trajectoire d'un véhicule automobile selon la revendication 4, **caractérisée en ce que** la courbe de conversion de couple de l'étape de conversion inverse (12), est commune avec la courbe de conversion de couple de l'étape de conversion (14) du système de direction assistée.

6. Procédé de correction de la trajectoire d'un véhicule automobile selon la revendication 4 ou 5, **caractérisée en ce que** la courbe de conversion de couple de l'étape de conversion inverse (12) est issue de séquences de tests et validations.

7. Procédé de correction (1) de la trajectoire d'un véhicule automobile selon l'une quelconque des revendications 1 à 6, **caractérisé en ce que** l'étape de détermination du couple actionneur de correction (T_{Req_Machine}) comprend une étape de régulation en boucle fermée (11) d'un écart δ_{diff}) obtenu entre un angle de braquage de correction (δ_{Ref}) et un angle de braquage mesuré δₘₑₐₛ) comportant:
- l'étape de détermination d'un couple actionneur de correction (_{TReq_Machine}),
- l'étape de traitement effectuée par le dispositif de direction assistée passant par l'étape de conversion (14).

8. Organe de correction (5) de la trajectoire d'un véhicule automobile **caractérisé en ce qu'**il est adapté pour mettre en œuvre un procédé de correction (1) selon l'une quelconque des revendications 1 à 7.

9. Dispositif de correction de la trajectoire du véhicule automobile comprenant un organe de correction (5) selon la revendication 8.

10. Véhicule automobile comprenant un dispositif de correction de la trajectoire du véhicule automobile selon la revendication 9.

## Patentansprüche

1. Verfahren zur Korrektur (1) der Fahrspur eines Kraftfahrzeugs durch Erfassung von Straßenmarkierungen am Boden, wobei das Kraftfahrzeug eine elektrische Servolenkungsvorrichtung (2) enthält, die ein Lenkrad, eine mit einer Lenksäule des Kraftfahrzeugs zusammenwirkende elektrische Maschine (15) und ein Steuerelement (3) aufweist, das einen Schritt der Bestimmung (13) eines Lenkeinschlag-Solldrehmoments (T_{Total}) für die Lenksäule und einen Schritt der Umwandlung (14) des Lenkeinschlag-Solldrehmoments (T_{Total}) in ein Antriebsdrehmoment (T_{Machine}) durchführt, das dazu bestimmt ist, an die elektrische Maschine (15) angelegt zu werden, wobei das Korrekturverfahren (1) einen ersten Schritt der Bestimmung eines Korrektur-Antriebsdrehmoments (T_{Req_Machine}) enthält, um auf die elektrische Maschine (15) einzuwirken, um die Fahrspur des Kraftfahrzeugs abhängig von einer Erfassung der Straßenmarkierungen am Boden zu korrigieren, wobei das Korrekturverfahren (1) **dadurch gekennzeichnet ist, dass** es einen von der den Umwandlungsschritt (14) durchlaufenden Servolenkungsvorrichtung ausgeführten Verarbeitungsschritt enthält, wobei das Verfahren einen dem Verarbeitungsschritt durch das Servolenkungssystem vorhergehenden Schritt umgekehrter Umwandlung (12) enthält.

2. Korrekturverfahren (1) nach Anspruch 1, **dadurch gekennzeichnet, dass** das Verfahren im Verarbeitungsschritt einen Lenkeinschlag-Korrektursollwert (T_{LKA_final}) vermittelt, der Teil der Steuerung eines Lenkeinschlag-Solldrehmoments (T_{Total}) ist.

3. Korrekturverfahren der Fahrspur eines Kraftfahrzeugs nach einem der Ansprüche 1 oder 2, **dadurch gekennzeichnet, dass** das Antriebsdrehmoment (T_{Machine}) gleich dem Korrektur-Antriebsdrehmoment (T_{Req_Machine}) ist.

4. Korrekturverfahren der Fahrspur eines Kraftfahrzeugs nach einem der Ansprüche 1 bis 3, **dadurch gekennzeichnet, dass** der Schritt umgekehrter Umwandlung (12) von einer Drehmoment-Umwandlungskurve abhängig von der Geschwindigkeit des Fahrzeugs und/oder von einem Lenkeinschlagwinkel des Kraftfahrzeugs und/oder von einem seitlichen Abweichungswert des Kraftfahrzeugs und/oder von einem Gierwert des Kraftfahrzeugs gestützt wird.

5. Korrekturverfahren der Fahrspur eines Kraftfahrzeugs nach Anspruch 4, **dadurch gekennzeichnet, dass** die Drehmoment-Umwandlungskurve des Schritts umgekehrter Umwandlung (12) mit der Drehmoment-Umwandlungskurve des Umwandlungsschritts (14) des Servolenkungssystems gemeinsam ist.

6. Korrekturverfahren der Fahrspur eines Kraftfahrzeugs nach Anspruch 4 oder 5, **dadurch gekennzeichnet, dass** die Drehmoment-Umwandlungskurve des Schritts umgekehrter Umwandlung (12) von Testfolgen und Validierungen stammt.

7. Korrekturverfahren (1) der Fahrspur eines Kraftfahrzeugs nach einem der Ansprüche 1 bis 6, **dadurch gekennzeichnet, dass** der Schritt der Bestimmung des Korrektur-Antriebsdrehmoments (T_{Req_Machine}) einen Schritt der Regelung in geschlossenem Regelkreis (11) einer Abweichung (δ_{diff}) enthält, die zwischen einem Korrektur-Lenkeinschlagwinkel (δ_{Ref}) und einem gemessenen Lenkeinschlagwinkel (δₘₑₐₛ) erhalten wird, der aufweist:
- den Schritt der Bestimmung eines Korrektur-Antriebsdrehmoments (T_{Req_Machine}),
- den von der den Umwandlungsschritt (14) durchlaufenden Servolenkungsvorrichtung ausgeführten Verarbeitungsschritt.

8. Korrekturelement (5) der Fahrspur eines Kraftfahrzeugs, **dadurch gekennzeichnet, dass** es geeignet ist, ein Korrekturverfahren (1) nach einem der Ansprüche 1 bis 7 durchzuführen.

9. Vorrichtung zur Korrektur der Fahrspur des Kraftfahrzeugs, die ein Korrekturelement (5) nach Anspruch 8 enthält.

10. Kraftfahrzeug, das eine Korrekturvorrichtung der Fahrspur des Kraftfahrzeugs nach Anspruch 9 enthält.

## Claims

1. Method for correcting (1) the trajectory of a motor vehicle by detecting road markings on the ground, the motor vehicle comprising an electrical assisted steering device (2) comprising a steering wheel, an electrical machine (15) cooperating with a steering column of the motor vehicle and a control member (3) implementing a step of determining (13) a steering lock setpoint torque (T_{Total}) for the steering column and a step of converting (14) the steering lock setpoint torque (T_{Total}) into an actuator torque (T_{Machine}) intended to be applied to the electrical machine (15), said correction method (1) comprising a first step of determining a correction actuator torque (T_{Req_Machine}), to act on the electrical machine (15) so as to correct the trajectory of the motor vehicle as a function of a detection of the road markings on the ground, said correction method (1) being **characterized in that** it comprises a processing step performed by the assisted steering device involving the conversion step (14), the method comprising an inverse processing step (12) preceding the step of processing by the assisted steering system.

2. Correction method (1) according to Claim 1, **characterized in that** the method obtains, in the processing step, a steering lock correction setpoint (T_{LKA_final}) that is part of the steering lock setpoint torque control (T_{Total}).

3. Method for correcting the trajectory of a motor vehicle according to either one of Claims 1 and 2, **characterized in that** the actuator torque (T_{Machine}) is equal to the correction actuator torque (T_{Reg_Machine}).

4. Method for correcting the trajectory of a motor vehicle according to any one of Claims 1 to 3, **characterized in that** the inverse conversion step (12) is supported by a torque conversion curve as a function of the speed of the vehicle and/or of a steering lock angle of the motor vehicle and/or of a value of lateral deviation of the motor vehicle and/or of a value of yaw of the motor vehicle.

5. Method for correcting the trajectory of a motor vehicle according to Claim 4, **characterized in that** the torque conversion curve of the inverse conversion step (12), is common with the torque conversion curve of the assisted steering system conversion step (14).

6. Method for correcting the trajectory of a motor vehicle according to Claim 4 or 5, **characterized in that** the torque conversion curve of the inverse conversion step (12) is derived from sequences of tests and validations.

7. Method for correcting (1) the trajectory of a motor vehicle according to any one of Claims 1 to 6, **characterized in that** the step of determining the correction actuator torque (T_{Req_Machine}) comprises a step of closed loop regulation (11) of a difference (δ_{diff}) obtained between a correction steering lock angle (δ_{Ref}) and a measured steering lock angle (δₘₑₐₛ) comprising:
- the step of determining a correction actuator torque (T_{Req_Machine}) ,
- the processing step performed by the assisted steering device involving the conversion step (14) .

8. Member for correcting (5) the trajectory of a motor vehicle, **characterized in that** it is adapted to implement a correction method (1) according to any one of Claims 1 to 7.

9. Device for correcting the trajectory of the motor vehicle comprising a correction member (5) according to Claim 8.

10. Motor vehicle comprising a device for correcting the trajectory of the motor vehicle according to Claim 9.
